# EUROPEAN PATENT SPECIFICATION

(11) **EP 3 236 755 B1**
(45) Date of publication and mention of the grant of the patent: **03.09.2025**
(21) Application number: 15762706.8
(22) Date of filing: 25.03.2015
(51) Int. Cl.: A21C 15/00, A23G 3/28, B65D 85/72

(54) **SEALABLE PIPING BAGS**
VERSCHLIESSBARE ROHRLEITUNGSBEUTEL
POCHES À DOUILLE POUVANT ÊTRE SCELLÉES

(30) Priority: 19.12.2014 US 201462094335 P
(43) Date of publication of application: 01.11.2017
(73) Proprietor: Folkmar, Jan, 6432 Rickenbach SZ (CH)
(72) Inventor: Folkmar, Jan, 6432 Rickenbach SZ (CH)
(74) Representative: Kandlbinder, Markus Christian
(86) International application number: PCT/IB2015/001338
(87) International publication number: WO 2016/097834

(56) References cited:
- US-A- 2 092 444
- US-A- 4 961 517
- US-A1- 2003 091 702
- US-A1- 2004 124 210
- US-A1- 2012 014 622
- US-A1- 2013 277 392
- US-S- D 310 317

## Description

### Technical Field

This invention relates to piping bags, pastry bags or icing bags, which are generally filled with a thick, viscous flowable material such as edible icing, pureed fruit or vegetable, or mayonnaise, or with a thinner flowable material such as jam or molten chocolate for drizzling, which is expressed from the bag with or without a nozzle, usually to achieve a decorative effect.

US 2013/277392 A1 discloses a bag comprising a flexible body forming an interior chamber, a first opening to the interior chamber at a first end of the flexible body, a first seal at the first opening, wherein the first opening is configured to permit a user to load a food product into the interior chamber of the bag through the first opening when the first opening is unsealed and prevent the food product from exiting through the first opening when the first seal is sealed, a second opening to the interior chamber at a second end of the flexible body, and a second seal at the second opening, wherein the second opening is configured to prevent the food product from exiting through the second opening when the second seal is sealed and permit a user to dispense the food product through the second opening when the second seal is unsealed.

US 2 092 444 A discloses a decorator comprising a conical bag of flexible material having a slit extending along the side of the bag, a separable fastener extending along the edges of the slit to form a tight closure for said slit, a conical nozzle having a maximum diameter larger than the smallest diameter of said bag and adapted to fit in the lower end or said bag and be wedged into position therein, said slit extending from the top end of the bag to a point adjacent said nozzle so as to permit the removal of the nozzle through said slit.

US 2003/091702 A1 discloses a disposable piping bag comprising a thin flexible pouch.

### Disclosure Of Invention

Bearing in mind the problems and deficiencies of the prior art, it is therefore an object of the present invention to provide an improved piping bag and method for expressing a thick, viscous flowable material therefrom.

It is another object of the present invention to provide an improved piping bag having a resealable closure.

A further object of the invention is to provide an improved piping bag comprising a film material having a heat resistance permitting the melting of flowable materials in the piping bag.

It is yet another object of the present invention to provide an improved piping bag which includes indicia printed onto the surface.

It is still another object of the present invention to provide an improved piping bag having an upper portion which facilitates folding down of the bag opening during filling,

It is still yet another object of the present invention to provide an improved piping bag including a double compartment for expressing two different color piping simultaneously.

Still other objects and advantages of the invention will in part be obvious and will in part be apparent from the specification.

According to a first aspect, the present invention relates to a disposable piping bag as claimed in the independent device claim.

There is provided a disposable piping bag comprising a pair of side panels having joined side edges, the bag having a substantially conical configuration, the side edges extending downward to a sealed or unsealed tip and extending upward to an opening along upper edges incorporating an integral resealable closure in the side panels.

The resealable closure has corresponding and adjacent lengths of a closure having one or more mating male ribs and female sealing channels on the side panels extending along a width of the bag opening. The piping bag may further include a tab or slider and slider track with the resealable closure.

The piping bag may have a configuration with a substantially frusto-conical lower portion, a substantially cylindrical mid-portion, and a substantially frusto-conical upper portion.

The side panels may be made of a film material having a heat resistance of up to about 160°C to permit the melting of flowable materials in the bag.

The side panels include indicia printed onto the surface, such as one or more tip cut lines for desired outlet diameters, measures for filled material, and labeling areas.

The tip may be cut to express flowable material directly out of the cut tip of the bag. The tip may employ an internally situated nozzle base and external tip sandwiching the bag film to express flowable material directly out of the external tip of the bag.

The piping bag may be a double bag with a sealed strip extending from the tip between the side edges of the side panels. The piping bag may be a double bag having an additional panel between the pair of side panels, the additional panel having side edges joined at the side edges of the pair of side panels.

The piping bag has an upper portion having a substantially cylindrical configuration adjacent the integral resealable closure to facilitate folding down of the bag opening during filling.

According to a second aspect, the present invention relates to a method of using a disposable piping bag as claimed in the independent method claim.

There is provided a method of using a disposable piping bag, comprising providing a disposable piping bag having a pair of side panels having joined side edges, the side edges extending downward to a sealed or unsealed tip and extending upward to an opening along upper edges incorporating an integral resealable closure in the side panels, the integral resealable closure extending to opposite ends of the closure at the side edges. The method includes holding the bag at the opposite ends of the upper edges, exerting pressure from the opposite ends inward to cause the upper edges to bow outward and open the opening along the upper edges, and filling the bag through the opening along the upper edges with a material to be contained in the bag and expressed through the tip, the upper edges being maintained in a bowed-open position exclusively by the pressure exerted inward from the opposite ends of the integral resealable closure.

The width of the bag along the upper edges between the opposite ends may be less than or equal to the distance between a user's thumb and forefinger when the user's hand is extended open, and the pressure exerted inward from the opposite ends may be by a user's thumb and other finger to maintain the upper edges in a bowed-open position.

The method may further include folding the upper edges of the bag outward and downward along the body of the bag prior to holding the bag at the opposite ends of the closure.

The upper edges of the bag may be unfolded prior to holding the bag at the opposite ends of the closure.

The bag may have an upper portion having a substantially cylindrical configuration adjacent the integral resealable closure to facilitate folding down of the bag opening during filling.

The method includes using any disposable piping bag described in the claims hereof.

### Brief Description of the Drawings

The features of the invention believed to be novel and the elements characteristic of the invention are set forth with particularity in the appended claims. The figures are for illustration purposes only and are not drawn to scale. The invention itself, however, both as to organization and method of operation, may best be understood by reference to the detailed description which follows taken in conjunction with the accompanying drawings in which:
Fig. 1 is a front view of one embodiment of the disposable piping bag of the present disclosure, showing an alternatingly conical and cylindrical configuration.
Fig. 2 is a front view of the disposable piping bag shown in Fig. 1.
Fig. 2a is a magnified view of a portion of the side-seal 32 of the piping bag of the present disclosure, as shown in Fig. 2.
Fig. 3 is a front perspective view of another embodiment of the disposable piping bag of the present disclosure, showing a conically-shaped piping bag with a skirt.
Fig. 4 is a front perspective view of still another embodiment of the disposable piping bag of the present disclosure, showing a conically-shaped piping bag without a skirt.
Fig. 5 is a plan view of a film roll including multiple disposable piping bags according to the present disclosure, prior to separation of the individual piping bags along the perforation lines.
Fig. 5a is a magnified view of a portion of a perforation line 27 and surrounding area, as shown in Fig. 5.
Fig. 6 is a perspective view of a method of filling the piping bag of the present invention by folding top edges 24' over a person's hand and spooning the contents into opening 26'.
Fig. 7 is a top perspective view of another method of filling the piping bag of the present invention by applying pressure at the opposite ends of the closure 30 to "pop" open the bag and then pouring in a flowable material or fluid for melting in the bag.
Fig. 8 is a plan view of a CPP film material roll including multiple disposable piping bags according to the present disclosure, prior to separation of the individual piping bags along the perforation line. A zipper closure is shown already formed on opposite edges of the film sheet before the individual bag walls are sealed together,
Fig. 9 is a front perspective view of an embodiment of the piping bag of the present invention including indicia printed on the piping bag, such as labeling areas, approximate measures of filled material and the like.
Fig. 10a is yet another embodiment of the disposable piping bag of the present disclosure, showing a piping bag sealed or laminated 27a from the tip 20a and upwards for a portion of the height of the piping bag, to allow for two different color piping to be expressed from the tip 20a simultaneously.
Fig. 10b is still yet another embodiment of the disposable piping bag of the present disclosure, showing a piping bag sealed or laminated 27a from the tip 20a and upwards for the entire height of the piping bag, to allow for two different color piping to be expressed from the tip 20a simultaneously.
Fig. 11 is still yet another embodiment of the disposable piping bag of the present disclosure, showing a dividing third film layer 21c welded or sealed between outer film layers 21a, 21b.
Fig. 11a is a magnified view of a portion of the outer wall of the embodiment of the disposable piping bag, as shown in Fig. 11, showing outer side walls 21a, 21b with inner dividing wall 21c therebetween.

### Modes For Carrying Out The Invention

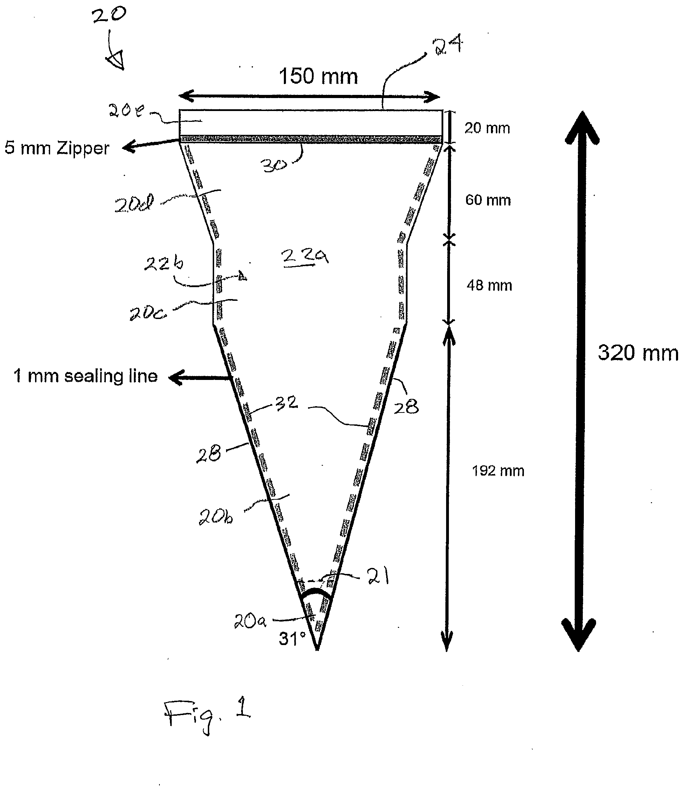

In describing the preferred embodiment of the present invention, reference will be made herein to Figs. 1 - 11a of the drawings in which like numerals refer to like features of the invention.

The present invention provides a disposable piping bag 20 made up of two (2) side panels 22a, 22b of similar configuration joined together by side seals 32 along or inside of the panel edges 28. The present invention may use various sealing methods to join the plastic panels, such as hot melt sealing, lamination, ultrasonic sealing, hot sealing bars, hot stamped, and the like, and the terms joining or sealing therefore encompass any of these methods. When placed together side-by-side, sealed along the edges 28 and filed with flowable material, the side panels 22a, 22b of the piping bag may form a lower portion 20b having a substantially frusto-conical configuration, a mid-portion 20c having a substantially cylindrical configuration, an upper portion 20d having a substantially frusto-conical configuration, and upper portion 20e having a substantially cylindrical configuration. The lower portion 20b may end in a sealed tip portion 20a, or may be cut to have an outlet opening 21. The tip portion 20a may have an included 31° angle, or any other desired angle.

The upper opening edge 24 is left unsealed between the panels 22a, 22b, and a reclosable seal may be provided. As shown, the upper portion 20e of the flexible plastic bag may be repeatedly sealed and opened using an integrally formed reclosable zipper (having a single or double track) or "zip-lock" type closure 30 of the type having corresponding and adjacent lengths of a mating male rib and a female sealing channel closure along the width of the bag opening. Instead of the single track shown, there may be two or more tracks of male rib and female channels, and a slider track and tab or slider may be used with the resealable or reclosable zipper closure.

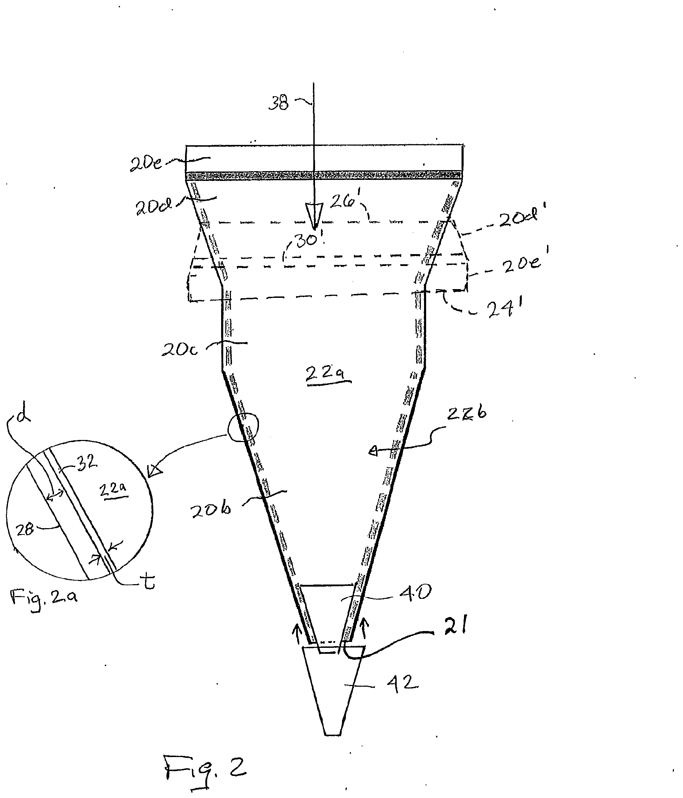

Fig. 2a shows a portion of the laminated or sealed side-seal 32, which may have a width or thickness t of about 0.1mm or more to have the required bag strength under use where pressure will be built up, to avoid bursting. The distance d between the panel edge 28 and the seal 32 shows a line of film remaining outside the seal, and is referred to as the skirt. This skirt width *d* plus the width of the sealing line *t* should be as small as possible, while still strong enough to prevent bursting, to avoid irritating or cutting the user's hands during use, and to prevent the skirt pieces from disturbing the flow of material out of the piping bag end. For example, if one is drizzling chocolate, it is best to have no skirt at all, since a skirt will inevitably be a hindrance to the clean flow of fluid out of the drizzling hole.

The piping bags may be made in HDPE (High-density Polyethylene) or LLDPE (Linear Low-density Polyethylene) or LDPE (Low-density Polyethylene) all monolayers, or coextruded combinations thereof. The piping bags may also be made of sealable BOPP (Bi-Oriented Polypropylene) film, or sealable CPP (Cast Polypropylene)-film, in which case they can incorporate reclosable zippers, sliders or other integral or separate closures. Preferably clear films are used, although colored film can also be used to allow color coding for specific bag content. The piping bags according to the invention are made of CPP.

These film thicknesses may be in the range of about 30 to 70 microns or more. The film can be as thin or as thick as the integrally formed male and female zipper tracks will allow. In practice, on normal LDPE zipper bags, the minimum gauge is usually about 30 microns, and the maximum is usually set by the cost restrictions or by the machine restrictions. For this invention, the bag should be as thin as possible to reduce on costs whilst being strong enough to withstand the expulsion of the content. The dimensions of the length of each portion 20b, 20c, 20d and 20e is shown in Fig. 1, with a bag height of 320mm or more. However, there is no limit on bag size, and the bag may be larger or smaller than the example.

In addition to the alternating conical and cylindrical configuration shown in the drawings, the piping bags of the present invention are made as a simple cone-shaped bag.

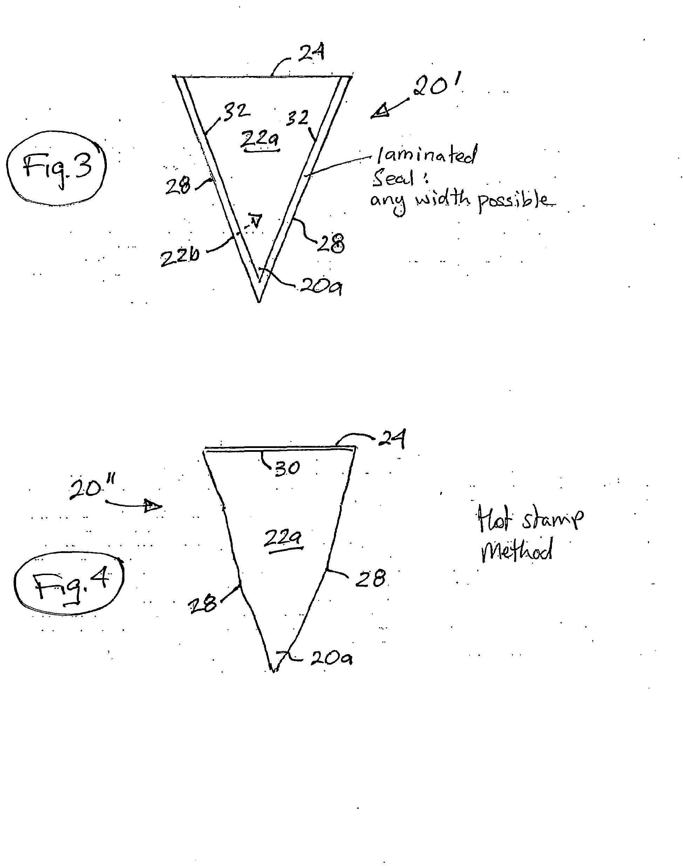

An example is shown in Fig. 3, where the triangular shaped panels 22a, 22b are laminated or sealed 32 within side edges 28 to form bag 20'. The two triangles or sides 22a, 22b can be joined together by using any of the aforementioned methods whereby the width of the seals can be varied, depending on the strength of the seal one is aiming to achieve. Considering that the content has to be pressed out of the bag, then the seals must be strong enough to withstand this pressure. This means that there are no limits on the width of the seal chosen. The only limits set are when considering that the bag must also sit comfortably in the hand when pressing the contents out of the bags. Therefore when using lamination for sealing the bag, it would be preferable to make the seals as thin as possible. For the same reason, it is preferred to avoid or at least keep any skirt width d to a minimum in order not to be a hindrance during use.

Another example is shown in Fig. 4, where the bag 20" is hot stamped from two pieces of film in the final triangular shape and welded together using heat sealing bars to form a welded side seal along edges 28 and no skirt. The resulting width of the hot stamped seals is usually much less than the width of the laminated seals.

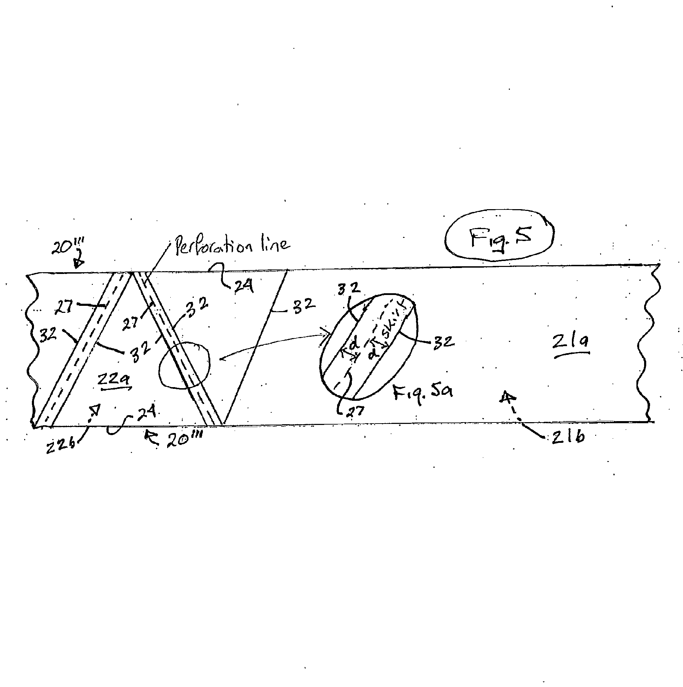

The piping bags of the present invention may be provided in different versions, either separated from one another so that they are loose in bundles, or still connected on rolls or blocked. When making a piping bag on rolls, the film is provided in two long sheets 21a, 21b and superimposed over one another as shown in Fig. 5. The film sheets 21a, 21b then pass through the converter and the individual bags 20‴ are converted by sealing bars whereby the area between the seals 32 are divided by perforations 27 so that the bags can be pulled off individually. There will have to be a skirt of width *d* after the sealing line 32 (Fig. 5a), in which the perforated line 27 is cut by tearing to form the edges 28. However, this kind of skirt can be a hindrance when using the piping bags for very fine work, like piping thin chocolate lines, where the skirt would be in the way of creating a clean line. Therefore when using the bags for such work it would be preferable to make as thin a skirt as possible.

As shown in Fig. 2, when the piping bag 20 of the present disclosure is to be used, i.e., filled, the user would typically fold down the top 24 with the zipper or slider 30 to position shown in phantom lines, with top opening edge 24' and zipper 30' facing downwards to create new opening 26'. The user would then fill the desired flowable material 38 through folded down opening 26' as indicated by the arrow, and subsequently fold the top part 24 back up again and seal the closure 30.

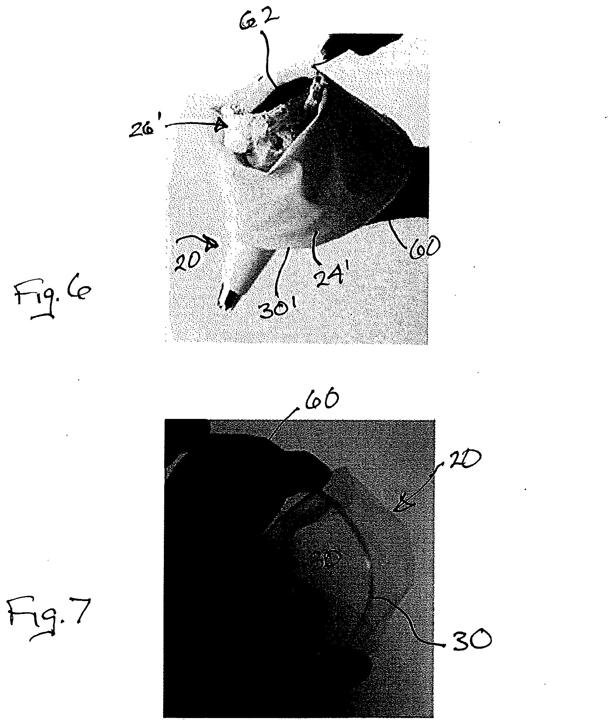

A professional would typically fill a piping bag by folding over the top edges 24' of the bag 20 over the hand 60, as shown in Fig. 6. In doing this, one needs to spoon in the content to the folded down opening 26' and one may clean the spoon or spatula 62 on the edge of the bag. For those not so experienced in this practice, one would simply use a jug or a piping bag stand to hold open the entrance of the bag. If the bag is intended for reuse or if the zipper closure 30' needs to be used more than once, the zipper closure must be kept clean, otherwise it may not close properly. The bag configuration as shown in Figs. 1 and 2 are particularly useful since the shape of the bag end 20d at the opening allows for the fluted cuff of the bag to be folded down easily during filling of stiffer fillings (e.g., cream, icing) to avoid getting the zipper or slider tracks closure dirty.

Alternatively, one can take the bag and, as shown in Fig. 7, use the strength of the zipper closure 30 to "pop" open the bag 20 by applying pressure at the at the opposite ends of the closure at the opening and holding the bag open using a finger and thumb while pouring in a flowable material or fluid (e.g., jam) or pellets (e.g., chocolate) for melting in the bag. The bag width, i.e., the length of the bag between the opposite ends at the opening, would need to be small enough to be able to pop it open with one hand, i.e., less than or equal to the distance between a user's thumb and forefinger when the user's hand is extended open. The pressure exerted inward from the opposite ends by a user's thumb and other finger is sufficient to maintain the upper edges in a bowed-open position without any other structure or force. The present invention may include reinforcement of the zipper closure 30 or the lip portion (20e, Fig. 1) above the zipper closure to achieve this. The bag may be "popped" open either with or without folding the upper edges of the bag outward and downward along the body of the bag prior to holding the bag at the opposite ends of the closure. Whether or not the bag width may be held between a user's thumb and finger, the "popping" action of the reinforced lips would assist in folding the bag over the hand or bag stand, as described above.

After filling, a special clip (not shown) may be employed to insert across the upper conical portion 29 and upper straight portion 20e of the bag to allow the user to gradually glide the clip downward along the outer surface of the panels and thereby squeeze and empty the contents effectively until the last portion is emptied and removed from the bag. A clip is not necessary, however, and the bag may be emptied by hand pressure.

Where the film material quality allows for use with heat, the present invention can be used in connection with a hot or warm water bath or the microwave whereby the content is filled into the bag, then the bag sealed with the zip and the bag suspended in a hot or warm water bath or put into a microwave. Once the content is molten and cooled enough to allow one to hold the bag in the hand, the tip 20a can then be cut off and the bag used to dribble the content over a cake or elsewhere. The zipper closure makes it ideal to reclose the bag during use, allowing renewed heating of the content throughout use until the bag is empty. Alternatively, the bag can be refilled with content. When using molten content, less pressure is needed to press the content through the opening at the end of the bag.

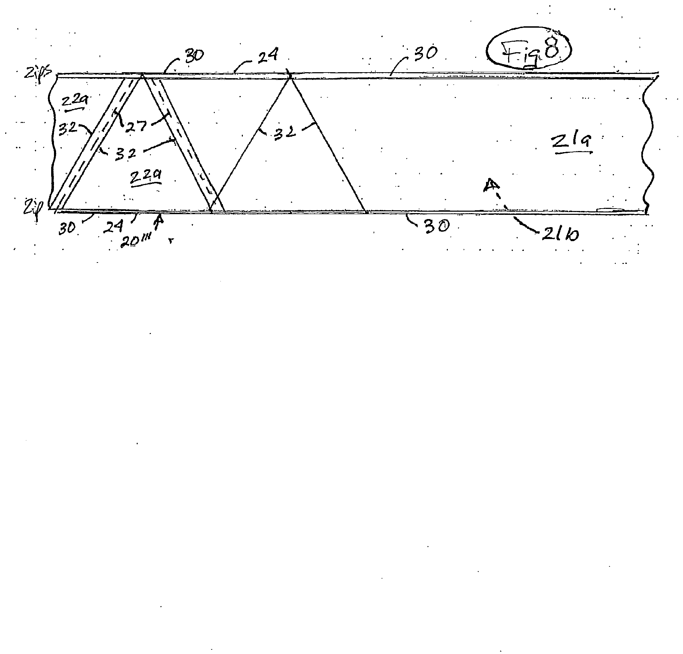

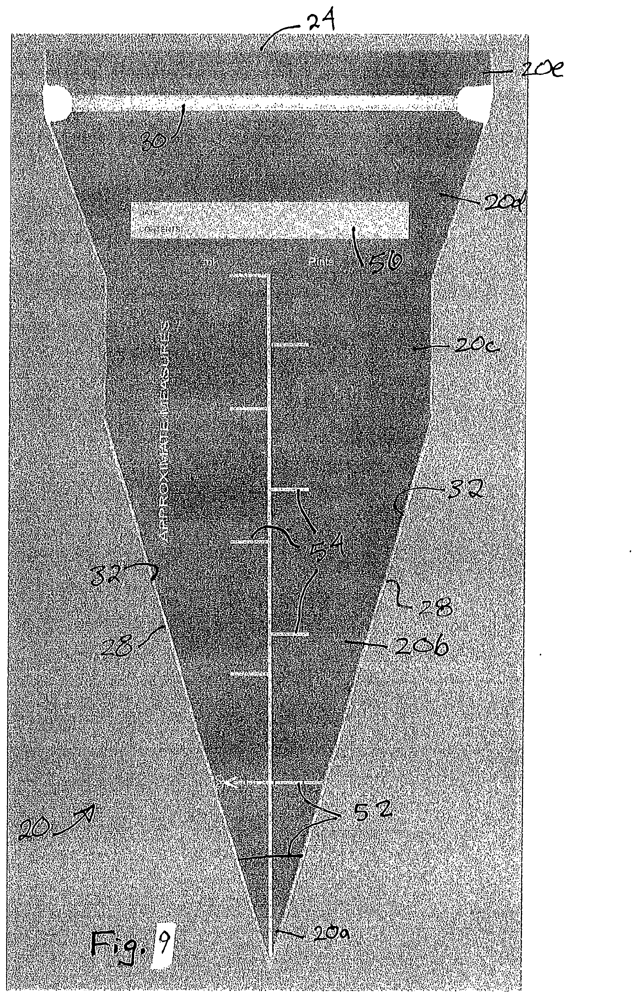

An advantage of using the CPP film material is that the film may be produced with the zipper closure already formed therein before the individual bag walls are sealed together. As shown in Fig. 8, the bags may be formed in a manner similar to that shown in Fig. 5, except that the zipper closures 30 would be formed continuously on the opposite edges of each film sheet. The CPP film material has relatively strong mechanical properties, and a heat resistance of up to 150 - 160°C, which permits the melting of flowable materials, such as chocolate, to be used for decoration. The CPP film also permits precision printing of any desired indicia onto the bags, such as one or more tip cut lines 52 for desired outlet diameters, approximate measures for the filled material 54, labeling areas 56, and the like, as shown in Fig. 9.The 31° tip angle makes it possible to cut the tip to squeeze and express any flowable material directly out of the opening at the cut tip 21 of the bag (Figs. 1 and 2). If however, the bag is used in connection with a stiffer content (e.g., icing) it may be desirable to employ an internally situated nozzle base 40 and external tip 42 sandwiching the bag film (Fig. 2), as in U.S. Patent No. 8,870,040. This would permit one to extract the content in different designs as provided in the nozzle tip 42. In this case, again the zipper closure allows an easy short-term storage of the content during use. It further allows the bags of for example different colored icing to be prepared in advance of the decorating and avoiding spillage or the drying out of the bag content. Since icing has a tendency to dry out very quickly, unless a bag is sealed, this can become a very real problem for the person doing the decorating.

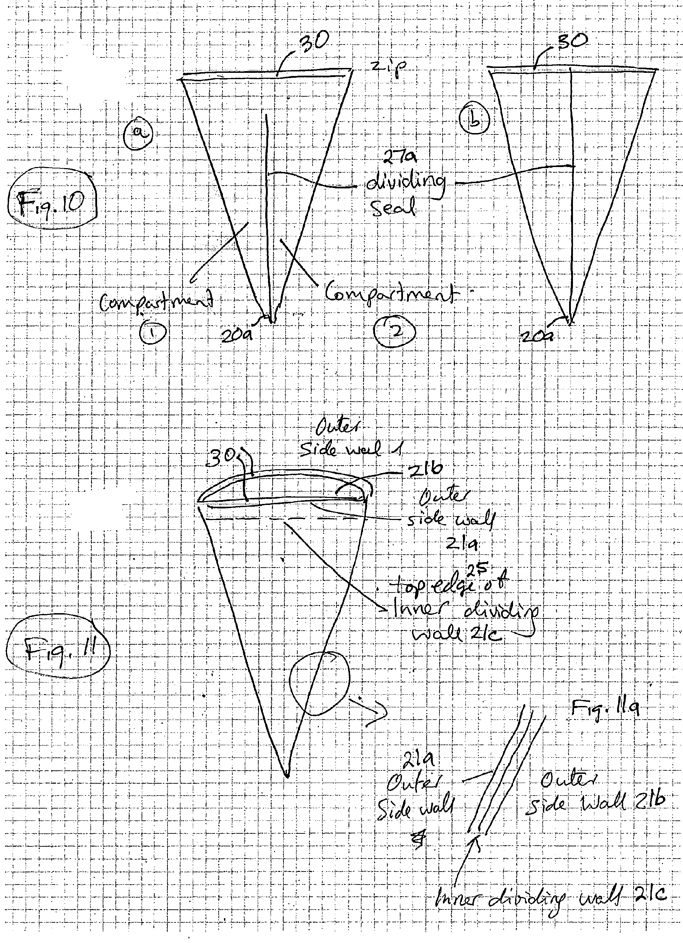

A further feature of the invention is that the bag may be made for a double compartment, for example, by using the methods shown in Figs. 10 or 11. In the method of Fig. 10, the two bag walls can be sealed or laminated 27a from the tip 20a and upwards either only a portion of the height of the bag (Fig. 10a), or all the way up the bag height (Fig. 10b). This allows for two different color piping to be expressed from the tip simultaneously. Alternatively, there could be a dividing third film layer 21c welded or otherwise sealed in between the other two outer film layers 21a, 21b (Figs. 11 and 11a). The top edge 25 of this inner layer 21c may be lower than the level of the zipper closure 30. This inner layer may be made in another color to distinguish it from the outer film layers. When using the bag, one would have to be careful not to press the content upwards. Therefore filling limits would need to be indicated to avoid overfilling. The hand would need to be able to press out both sides of the two compartments without the contents pressing backwards up towards the zipper closure.

### Numbered features:

- 20: piping bag
- 20a: bag tip
- 20b: bag lower conical portion
- 20c: bag mid cylindrical portion
- 20d: bag upper conical portion
- 20e: bag upper conical portion
- 21ab: film sheet
- 22ab: side panel
- 24: bag upper opening edge
- 26: bag folded down opening
- 27: perforation line
- 28: panel edge
- 32: side seal
- 38: direction of filling
- 40: nozzle base
- 42: nozzle tip
- 52: tip cut lines for desired outlet diameters
- 54: measures for the filled material
- 56: labeling areas
- 60: user's hand

## Claims

1. A disposable piping bag (20) comprising a pair of side panels (22a, 22b) having joined side edges (28), the side edges (28) extending downward to a sealed or unsealed tip (20a) and extending upward to an opening along upper edges (24), incorporating an integral resealable closure (30) in the side panels (22a, 22b),
wherein the resealable closure (30) has corresponding and adjacent lengths of a closure having one or more mating male ribs and female sealing channels on the side panels (22a, 22b) extending along a width of the bag opening,
wherein the bag (20) has a substantially conical configuration; and
the bag (20) has an upper portion (20e) having a substantially cylindrical configuration adjacent the integral resealable closure (30) to facilitate folding down of the bag opening during filling; and
**characterised in that**
the bag (20) is made from CPP (Cast Polypropylene); and
the side panels (22a, 22b) include indicia printed onto the surface (52, 54, 56), the indicia representing approximate measures for the filled material (54).

2. The piping bag (20) of claim 1, wherein the bag (20) has a configuration with a substantially frusto-conical lower portion (20b), a substantially cylindrical mid-portion (20c), and a substantially frusto-conical upper portion (20d).

3. The piping bag (20) of claim 1, wherein the side panels (22a, 22b) are made of a film material having a heat resistance of up to about 160°C to permit the melting of allowable materials in the bag (20).

4. The piping bag (20) of claim 1, wherein the tip (20a) may be cut to express flowable material directly out of the cut tip (20a) of the bag (20).

5. The piping bag (20) of claim 1, wherein the bag (20) is a double bag with a sealed strip extending from the tip (20a) between the side edges (28) of the side panels (22a, 22b).

6. The piping bag (20) of claim 1, wherein the bag (20) is a double bag having an additional panel between the pair of side panels (22a, 22b), the additional panel having side edges joined at the side edges (28) of the pair of side panels (22a, 22b).

7. A method of using a disposable piping bag (20) comprising the steps of:
providing a disposable piping bag (20) according to any preceding claim;
holding the bag (20) at the opposite ends of the upper edges (24);
exerting pressure from the opposite ends inward to cause the upper edges (24) to bow outward and open the opening along the upper edges (24);
filling the bag (20) through the opening along the upper edges (24) with a material to be contained in the bag (20) and expressed through the tip (20a), the upper edges (24) being maintained in a bowed-open position exclusively by the pressure exerted inward from the opposite ends of the integral resealable closure (30).

8. The method of claim 7, wherein the width of the bag (20) along the upper edges (24) between the opposite ends is less than or equal to the distance between a user's thumb and forefinger when the user's hand is extended open, and the pressure exerted inward from the opposite ends is by a user's thumb and other finger to maintain the upper edges (24) in a bowed-open position.

9. The method of claim 7, including folding the upper edges (24) of the bag (20) outward and downward along the body of the bag (20) prior to holding the bag (20) at the opposite ends of the closure (30).

10. The method of claim 7, wherein the upper edges (24) of the bag (20) are unfolded prior to holding the bag (20) at the opposite ends of the closure (30).

11. The method of claim 7, wherein the provided disposable piping bag (20) is a piping bag (20) according to claim 3 and the method comprises an additional step of heating the filled bag in a water bath or microwave.

## Patentansprüche

1. Einweg-Spritzbeutel (20) mit einem Paar Seitenwänden (22a, 22b) mit verbundenen Seitenkanten (28), wobei die Seitenkanten (28) sich nach unten zu einer abgedichteten oder nicht abgedichteten Spitze (20a) erstrecken und sich nach oben zu einer Öffnung entlang Oberkanten (24) erstrecken, wobei ein einstückiger wiederverschließbarer Verschluss (30) in den Seitenwänden ausgebildet ist, wobei der wiederverschließbare Verschluss (30) entsprechende und benachbarte Längen eines Verschlusses aufweist, der eine oder mehrere ineinander passende männliche Rippen und weibliche Dichtungsschlitze an den Seitenwänden (22a, 22b) aufweist, die sich entlang einer Breite der Beutelöffnung erstrecken, wobei der Beutel (20) eine im Wesentlichen konische Konfiguration aufweist; und der Beutel (20) einen oberen Abschnitt (20e) mit einer im Wesentlichen zylindrischen Konfiguration benachbart zu dem einstückigen wiederverschließbaren Verschluss (30) aufweist, um ein Zusammenfalten der Beutelöffnung während des Füllens zu erleichtern; und
**dadurch gekennzeichnet, dass**
der Beutel (20) aus CPP (Cast Polypropylen) hergestellt ist; und die Seitenwände (22a, 22b) auf die Oberfläche (52, 54, 56) aufgedruckte Markierungen aufweisen, wobei die Markierungen ungefähre Maße für den eingefüllten Werkstoff (54) darstellen.

2. Spritzbeutel (20) nach Anspruch 1, wobei der Beutel (20) eine Konfiguration mit einem im Wesentlichen kegelstumpfförmigen unteren Abschnitt (20b), einem im Wesentlichen zylindrischen mittleren Abschnitt (20c) und einem im Wesentlichen kegelstumpfförmigen oberen Abschnitt (20d) aufweist.

3. Spritzbeutel (20) nach Anspruch 1, wobei die Seitenwände (22a, 22b) aus einem Folienwerkstoff mit einer Wärmebeständigkeit von bis zu etwa 160°C hergestellt sind, um das Schmelzen von zulässigen Werkstoffen im Beutel (20) zu ermöglichen.

4. Spritzbeutel (20) nach Anspruch 1, wobei die Spitze (20a) abgeschnitten ist, um fließfähigen Werkstoff direkt aus der abgeschnittenen Spitze (20a) des Beutels (20) abzugeben.

5. Spritzbeutel (20) nach Anspruch 1, wobei der Beutel (20) ein Doppelbeutel mit einem abgedichteten Streifen ist, der sich von der Spitze (20a) zwischen den Seitenkanten (28) der Seitenwände (22a, 22b) erstreckt.

6. Spritzbeutel (20) nach Anspruch 1, wobei der Beutel (20) ein Doppelbeutel mit einer zusätzlichen Wand zwischen dem Paar von Seitenwände (22a, 22b) ist, wobei die zusätzliche Wand Seitenkanten aufweist, die mit den Seitenkanten (28) des Paares von Seitenwände (22a, 22b) verbunden sind.

7. Verfahren zum Verwenden eines Einweg-Spritzbeutels (20), das die folgenden Schritte aufweist: Bereitstellen eines Einweg-Spritzbeutels (20) gemäß einem der vorstehenden Ansprüche; Halten des Beutels (20) an den gegenüberliegenden Enden der Oberkanten (24); Ausüben von Druck von den gegenüberliegenden Enden nach innen, um die Oberkanten (24) nach außen zu biegen und die Öffnung entlang der Oberkanten (24) zu öffnen; Füllen des Beutels (20) durch die Öffnung entlang der Oberkanten (24) mit einem Werkstoff, der in dem Beutel (20) enthalten sein soll und durch die Spitze (20a) abgegeben wird, wobei die Oberkanten (24) ausschließlich durch den von den gegenüberliegenden Enden des einstückigen wiederverschließbaren Verschlusses (30) nach innen ausgeübten Druck in einer gebogenen, geöffneten Position gehalten werden.

8. Verfahren nach Anspruch 7, wobei die Breite des Beutels (20) entlang der Oberkanten (24) zwischen den gegenüberliegenden Enden kleiner oder gleich dem Abstand zwischen dem Daumen und dem Zeigefinger eines Benutzers ist, wenn die Hand des Benutzers offen ausgestreckt ist, und der Druck, der von den gegenüberliegenden Enden nach innen ausgeübt wird, von dem Daumen und dem anderen Finger eines Benutzers ausgeübt wird, um die Oberkanten (24) in einer gebogenen, offenen Position zu halten.

9. Verfahren nach Anspruch 7, folgendes aufweisend: Zusammenfalten der Oberkanten (24) des Beutels (20) nach außen und nach unten entlang des Körpers des Beutels (20), bevor der Beutel (20) an den gegenüberliegenden Enden des Verschlusses (30) zusammengefaltet wird.

10. Verfahren nach Anspruch 7, wobei die Oberkanten (24) des Beutels (20) ausgefaltet werden, bevor der Beutel (20) an den gegenüberliegenden Enden des Verschlusses (30) gehalten wird.

11. Verfahren nach Anspruch 7, wobei der bereitgestellte Einweg-Spritzbeutel (20) ein Spritzbeutel (20) nach Anspruch 3 ist und das Verfahren folgenden zusätzlichen Schritt aufweist: Erhitzen des gefüllten Beutels in einem Wasserbad oder in der Mikrowelle.

## Revendications

1. Sac à douille jetable (20) comprenant une paire de panneaux latéraux (22a, 22b) ayant des bords latéraux joints (28), les bords latéraux (28) s'étendant vers le bas jusqu'à une pointe scellée ou non scellée (20a) et s'étendant vers le haut jusqu'à une ouverture le long de bords supérieurs (24), incorporant une fermeture refermable intégrée (30) dans les panneaux latéraux (22a, 22b),
dans lequel la fermeture refermable (30) présente des longueurs correspondantes et adjacentes d'une fermeture comportant une ou plusieurs nervures mâles et canaux d'étanchéité femelles conjugués sur les panneaux latéraux (22a, 22b) s'étendant le long d'une largeur de l'ouverture du sac,
dans lequel le sac (20) présente une configuration sensiblement conique ; et
le sac (20) comporte une partie supérieure (20e) ayant une configuration sensiblement cylindrique adjacente à la fermeture refermable intégrée (30) pour faciliter le rabattement de l'ouverture du sac pendant le remplissage ; et
**caractérisé en ce que**
le sac (20) est fabriqué en CPP (polypropylène coulé) ; et
les panneaux latéraux (22a, 22b) incluent des indications imprimées sur la surface (52, 54, 56), les indications représentant des mesures approximatives pour le matériau rempli (54).

2. Sac à douille (20) selon la revendication 1, dans lequel le sac (20) a une configuration avec une partie inférieure sensiblement tronconique (20b), une partie médiane sensiblement cylindrique (20c) et une partie supérieure sensiblement tronconique (20d).

3. Sac à douille (20) selon la revendication 1, dans lequel les panneaux latéraux (22a, 22b) sont constitués d'un matériau en film ayant une résistance à la chaleur allant jusqu'à environ 160 °C pour permettre la fusion des matériaux autorisés dans le sac (20).

4. Sac à douille (20) selon la revendication 1, dans lequel la pointe (20a) peut être coupée pour expulser un matériau fluide directement par la pointe coupée (20a) du sac (20).

5. Sac à douille (20) selon la revendication 1, dans lequel le sac (20) est un sac double avec une bande scellée s'étendant depuis la pointe (20a) entre les bords latéraux (28) des panneaux latéraux (22a, 22b).

6. Sac à douille (20) selon la revendication 1, dans lequel le sac (20) est un sac double comportant un panneau supplémentaire entre la paire de panneaux latéraux (22a, 22b), le panneau supplémentaire ayant des bords latéraux joints au niveau des bords latéraux (28) de la paire de panneaux latéraux (22a, 22b).

7. Procédé d'utilisation d'un sac à douille jetable (20) comprenant les étapes consistant à :
fournir un sac à douille jetable (20) selon l'une quelconque des revendications précédentes ;
tenir le sac (20) aux extrémités opposées des bords supérieurs (24) ;
exercer une pression depuis les extrémités opposées vers l'intérieur pour amener les bords supérieurs (24) à se courber vers l'extérieur et ainsi ouvrir l'ouverture le long des bords supérieurs (24) ;
remplir le sac (20) à travers l'ouverture le long des bords supérieurs (24) avec un matériau destiné à être contenu dans le sac (20) et expulsé par la pointe (20a), les bords supérieurs (24) étant maintenus dans une position courbée ouverte exclusivement par la pression exercée vers l'intérieur depuis les extrémités opposées de la fermeture refermable intégrée (30).

8. Procédé selon la revendication 7, dans lequel la largeur du sac (20) le long des bords supérieurs (24) entre les extrémités opposées est inférieure ou égale à la distance entre le pouce et l'index d'un utilisateur lorsque la main de l'utilisateur est tendue, et la pression exercée vers l'intérieur depuis les extrémités opposées est produite par le pouce et un autre doigt d'un utilisateur afin de maintenir les bords supérieurs (24) dans une position courbée vers l'extérieur.

9. Procédé selon la revendication 7, incluant le fait de plier les bords supérieurs (24) du sac (20) vers l'extérieur et vers le bas le long du corps du sac (20) avant de tenir le sac (20) aux extrémités opposées de la fermeture (30).

10. Procédé selon la revendication 7, dans lequel les bords supérieurs (24) du sac (20) sont dépliés avant de tenir le sac (20) aux extrémités opposées de la fermeture (30).

11. Procédé selon la revendication 7, dans lequel le sac à douille jetable (20) fourni est un sac à douille (20) selon la revendication 3 et le procédé comprend une étape supplémentaire consistant à chauffer le sac rempli dans un bain-marie ou un four à micro-ondes.
